# EUROPÄISCHE PATENTANMELDUNG

(11) **EP 4 576 363 A1**
(43) Veröffentlichungstag der Anmeldung: **25.06.2025**
(21) Anmeldenummer: 24217455.5
(22) Anmeldetag: 04.12.2024
(51) Int. Cl.: H01M 50/242, H01M 50/204, H01M 50/211, H01M 50/244, H01M 50/264, H01M 10/04

(54) **PROZESSANORDNUNG SOWIE VERFAHREN ZUR FERTIGUNG EINES BATTERIEMODULS**

(30) Priorität: 22.12.2023 DE 102023136431
(71) Anmelder: Lisa Dräxlmaier GmbH, 84137 Vilsbiburg (DE)
(72) Erfinder: BLASCHKE, Christian, 84032 Landshut (DE); Wimmer, Andreas, 84030 Ergolding (DE); Maier, Markus, 84028 Landshut (DE); HOFER, Manuel, 84087 Weng (DE); Englmeier, Johann, 84140 Gangkofen (DE)

(57) **Zusammenfassung**

Die Erfindung betrifft eine Prozessanordnung zur Fertigung eines Batteriemoduls mit einem Modulgehäuse (1), in dem ein Zellstapel, insbesondere aus Pouchzellen, angeordnet ist, der in einer Stapelrichtung zwischen Modulgehäusewänden (5, 7) mit einer mechanischen Vorspannung (Fv) beaufschlagt ist, mit einer Pressstation, in der der Zellstapel in einem Pressprozess mittels eines Werkstückträgers (21) unter mechanische Vorspannung (Fv) setzbar ist, und mit einer Einziehstation, in der ein Zuganker (43) den Zellstapel unter Aufrechterhaltung der mechanischen Vorspannung (Fv) in einem Einziehprozess aus dem Werkstückträger (21) in das Modulgehäuse (1) einzieht. Erfindungsgemäß sind zur Aufrechterhaltung und/oder gleichmäßigen Verteilung der mechanischen Vorspannung (Fv) des Zellstapels während des Einziehprozesses Zugplatten (27) als Montagehilfe bereitgestellt.

## Beschreibung

### Technisches Gebiet

Die Erfindung betrifft eine Prozessanordnung zur Fertigung eines Batteriemoduls nach dem Oberbegriff des Anspruches 1 sowie ein Verfahren zur Fertigung eines solchen Batteriemoduls nach dem Oberbegriff des Anspruches 10.

Ein Batteriemodul für ein Hochvolt-Batteriesystem kann ein Modulgehäuse aufweisen, in dem ein Zellstapel angeordnet ist. Der Zellstapel ist aus einer Vielzahl von in Stapelrichtung hintereinander angeordneten Pouchzellen aufgebaut. In Einbaulage ist der Zellstapel zwischen Modulgehäusewänden mit einer mechanischen Vorspannung beaufschlagt, um Volumenänderungen der Batteriezellen während der Lade-/Entladevorgänge auszugleichen.

In einem gattungsgemäßen Verfahren zur Fertigung eines solchen Batteriemoduls wird der in einem Stapelprozess hergestellte Zellstapel einem Pressprozess unterworfen, bei dem der Zellstapel mittels eines Werkstückträgers unter mechanische Vorspannung gesetzt wird. Anschließend folgt ein Bearbeitungsprozess, bei dem unter anderem die Zellableiter der Batteriezellen mittels Stromschienen elektrisch miteinander verschaltet werden. Danach wird ein Einziehprozess durchgeführt, bei dem der Zellstapel von dem Werkstückträger in das Modulgehäuse gezogen wird. Während dieses Prozessflusses verbleibt der Werkstückträger permanent am Zellstapel, um diesen unter mechanischer Vorspannung zu halten.

Beim Einziehprozess besteht eine Problematik darin, den verspannten Zustand des Zellstapels beim Übergang vom Werkstückträger zum Modulgehäuse aufrechtzuerhalten, damit der Zellstapel sicher sowie beschädigungsfrei im Modulgehäuse positioniert wird. Pouchzellen dürfen während des Einziehprozesses zwar mit einer Flächenpressung beaufschlagt werden. Diese sollte aber möglichst gleichmäßig über den gesamten Zellkörper verteilt sein. Bei einer punktuellen Belastung auf die Zellhaut bilden sich Druckstellen aus, so dass die Zelle im Inneren unmittelbar oder mit Langzeitfolgen beschädigt werden kann.

Prozesse, bei denen Batteriezellen in eine Modulgehäuse verbracht werden, sind beispielsweise auch aus der US 2022/0320569 A1, aus der DE 10 2019 109 715 A1 oder aus der AT 519967 A4 bekannt.

### Stand der Technik

Im Stand der Technik baut sich im Einziehprozess eine punktuelle bzw. ungleichmäßige Belastung der stapeläußeren Batteriezellen auf. Eine solche ungleichmäßige Belastung kann abhängig von der aufgebrachten Kraft zu Beschädigungen der Zelle führen. Da in der aktuellen Elektromobilität immer leistungsstärkere Zellen verbaut werden, steigt in vielen Fällen auch das Swelling der Zellen. Dies führt zu höheren Kompressionskräften, welche nötig sind, um solche Pouchzellen weiterhin im Modulgehäuse verbauen zu können. Durch die steigenden Kompressionskräfte erhöht sich auch der Grad der Belastung bzw. Beschädigung, der im Stand der Technik beim Einziehprozess auf die Zellen ausgeübt wird. Des Weiteren werden die Verspannkräfte bei leistungsstärkeren Batteriezellen unter Umständen derart groß, dass die aus dem Stand der Technik bekannten Einziehprozesse nicht mehr ausreichen, um Reibungswiderstände zum Modulgehäuse zu überwinden und den Zellstapel in das Modulgehäuse einzuführen.

### Beschreibung der Erfindung

Die Aufgabe der Erfindung besteht darin, eine Prozessanordnung sowie ein Verfahren zur Fertigung eines Batteriemoduls bereitzustellen, bei dem im Einziehprozess der Zellstapel insbesondere auch bei hoher mechanischer Vorspannung im Vergleich zum Stand der Technik in einfacher Weise sowie beschädigungsfrei in das Modulgehäuse des Batteriemoduls einziehbar ist.

Die Aufgabe ist durch die Merkmale des Anspruches 1 oder 10 gelöst. Bevorzugte Weiterbildungen der Erfindung sind in den Unteransprüchen offenbart.

Die Erfindung betrifft eine Prozessanordnung zur Fertigung eines Batteriemoduls mit einem Modulgehäuse, in dem ein Zellstapel, insbesondere aus Pouchzellen, angeordnet ist. In der Zusammenbaulage ist der im Modulgehäuse verbaute Zellstapel in Stapelrichtung zwischen Modulgehäusewänden mit einer mechanischen Vorspannung beaufschlagt. Die Prozessanordnung zur Herstellung eines solchen Batteriemoduls weist eine Pressstation auf, in der der Zellstapel in einem Pressprozess mittels eines Werkstückträgers unter mechanische Vorspannung gesetzt wird. Zudem weist die Prozessanordnung eine Einziehstation auf. In der Einziehstation zieht ein Zuganker den Zellstapel unter Aufrechterhaltung der mechanischen Vorspannung aus dem Werkstückträger in das Modulgehäuse. Gemäß dem kennzeichnenden Teil des Anspruches 1 wird die mechanische Vorspannung des Zellstapels am Übergang vom Werkstückträger in das Modulgehäuse wie folgt aufrechterhalten und gleichmäßig im Zellstapel verteilt: So weist die Prozessanordnung Zugplatten auf, die beim Einziehprozess als Montagehilfe dienen. Die Zugplatten sind an beiden Stapelenden des Zellstapels angeordnet und zusammen mit dem Zellstapel im Werkstückträger verspannt. Jede der Zugplatten überragt den Zellstapel in der Einziehrichtung mit einem Zugplatten-Überstand.

Dadurch gestaltet sich der Einziehprozess wie folgt: Zu Beginn des Einziehprozesses werden die dem Zellstapel vorauseilenden Zugplatten-Überstände in das Modulgehäuse eingefahren und stützen sich diese unter Aufbau einer gleichmäßigen mechanischen Vorspannung gleitend an der Innenseite der jeweiligen Modulgehäusewand ab. Im weiteren Einziehprozess-Verlauf zieht der Zuganker den, den Zugplatten-Überständen nacheilenden Zellstapel in das Modulgehäuse ein. Unter Verwendung der beiden erfindungsgemäßen Zugplatten ist möglich, auch eine hohe mechanische Vorspannung auf die Batteriezellen wirken zu lassen, ohne die Batteriezellen während des Einziehprozesses punktuell zu belasten. Die Zugplatten dienen sowohl als Schutz für die beiden Stapelenden als auch als Kraftverteiler, die punkt- oder linienförmige Kräfte in die gesamte Fläche des jeweiligen Zellstapelendes einleiten. Des Weiteren bilden die Zugplatten einen stabilen Angriffspunkt, um zum Beispiel die Zugkraft in den Zellstapel einzuleiten. Die Zugkraft wird dabei von den stapeläußeren Batteriezellen über ihre gesamte Fläche aufgenommen.

Je weiter der Zellstapel während des Einziehprozesses in das Modulgehäuse eingezogen wird, desto größer wird die Kontaktfläche zwischen den beiden Fügepartnern. Bei einem Modul, das eine große mechanische Vorspannung erfordert, kann dieser Reibkontakt zwischen den Fügepartnern im Stand der Technik zu einer Beschädigung des Zellstapels führen. Mit Hilfe der erfindungsgemäßen Zugplatten kann der Zellstapel auch bei hoher mechanischer Vorspannung zuverlässig eingezogen werden, da die gesamte mechanische Vorspannung durch die Zugplatten in das Modulgehäuse eingebracht wird.

In einer technischen Umsetzung kann das Modulgehäuse einen als Strangpressprofil gebildeten Grundkörper aufweisen, der in der Einziehrichtung betrachtet zwei gegenüberliegende offene Gehäuseseiten aufweist. Diese können im Einziehprozess in der Einziehrichtung in Flucht mit dem Zellstapel ausgerichtet sein. Der Zuganker ist daher während des Einziehprozesses durch die offenen Gehäuseseiten des Modulgehäuses führbar, wodurch sich eine günstige Einziehkraft-Einleitung in den Zellstapel ergibt.

In einer konkreten Ausführungsform kann der Einziehprozess in einen ersten Einzieh-Prozessschritt und in einen zweiten Einzieh-Prozessschritt unterteilt sein. Im ersten Einzieh-Prozessschritt zieht der Zuganker die Zugplatten mit dem zwischengeordneten Zellstapel als eine bewegungsgekoppelte Vormontageeinheit vom Werkstückträger in das Modulgehäuse bis eine Zellstapel-Endlage erreicht ist. Im zweiten Prozessschritt werden die beiden Zugplatten aus dem Modulgehäuse entfernt, so dass keine Montagehilfen im Modulgehäuse verbleiben.

Die Zellstapel-Endlage ist bevorzugt dann erreicht, wenn der Zellstapel während des ersten Einzieh-Prozessschrittes in Anschlag mit einem Rückhalter kommt. D.h., dass ab Erreichen der Zellstapel-Endlage eine Weiterbewegung des Zellstapels in der Einziehrichtung vom Rückhalter unterbunden ist. In diesem Fall können die beiden Zugplatten im zweiten Einzieh-Prozessschritt bevorzugt mit Hilfe des Zugankers aus dem Modulgehäuse gezogen werden. Im zweiten Einzieh-Prozessschritt wird der Zuganker weiter in einer mit der Einziehrichtung übereinstimmenden Ausziehrichtung bewegt. Dadurch werden die Zugplatten - nunmehr bewegungsentkoppelt vom Zellstapel - aus einer vom Werkstückträger abgewandten offenen Gehäuseseite des Modulgehäuses herausgezogen.

Bevorzugt ist es, wenn in der Einziehrichtung betrachtet zwischen dem Zuganker und dem Zellstapel ein Freigang ausgebildet ist. Im Freigang kann während des zweiten Einzieh-Prozessschritts der Rückhalter positioniert werden. Der Rückhalter kann in diesem Fall in ausreichend großflächiger Anlage sowie in Flucht zur Einziehrichtung eine Rückhaltekraft auf den Zellstapel aufbringen.

Die Zellableiter der im Zellstapel gestapelten Batteriezellen ragen quer zur Stapelrichtung zum Beispiel beidseitig vom Zellstapel ab. Die Zellableiter des Zellstapels werden über Stromschienen miteinander elektrisch verschaltet. Diese sind in einem Kunststoffträger integriert. Der Kunststoffträger kann neben den Stromschienen auch weitere elektrische Komponenten, etwa Temperatursensoren, aufweisen. Die elektrische Verschaltung der Batteriezellen wird in einem Bearbeitungsprozess durchgeführt, der nach dem Pressprozess stattfindet. Im zweiten Einzieh-Prozessschritt ist daher der Rückhalter nicht in unmittelbarer Anlage mit den leicht verformbaren Zellableitern, sondern vielmehr in Anlage mit dem Kunststoffträger.

Bei einem Batteriemodul, das eine hohe mechanische Vorspannung des Zellstapels erfordert, besteht das Risiko, dass die Gleiteigenschaften der jeweiligen Zugplatte nicht mehr ausreichen, um die Zugplatten im zweiten Einzieh-Prozessschritt aus dem Modulgehäuse beschädigungsfrei herauszuziehen. Vor diesem Hintergrund kann die Gleitfähigkeit der Zugplatten wie folgt gesteigert werden: So kann als Gleitmittel eine Gleitfolie verwendet werden. Die Gleitfolie kann bevorzugt auf Umschlag als eine schlaufenförmige Doppellage zwischen der jeweiligen Zugplatte und dem Zellstapelende positioniert sein. Die schlaufenförmige Doppellage kann aus einer in Stapelrichtung betrachtet zugplattenseitigen Außenlage und einer zellstapelseitigen Innenlage bestehen. Die Außenlage und die Innenlage sind bevorzugt jeweils mit einem Außenlagen-Folienende und einem Innenlagen-Folienende in der Einziehrichtung über den Zellstapel hinaus verlängert. Dadurch ist die Außenlage und/oder die Innenlage der Gleitfolie in einfacher Weise mit Zugkräften beaufschlagbar, um die Gleiteigenschaften der jeweiligen Zugplatte zu steuern. Eine solche Steuerung der Gleiteigenschaften kann während des Einziehprozesses bevorzugt wie folgt gestaltet sein: Im ersten Einzieh-Prozessschritt können die beiden Folienenden der Innenlage und der Außenlage zusammen mit der jeweiligen Zugplatte kraftübertragend am Zuganker angebunden sein. Dadurch findet ein ausreichend großer Reibkraft-Aufbau zwischen dem Zellstapel, der (zueinander nicht verschiebbaren) Folien-Doppellage und der Zugplatte statt, um im ersten Einzieh-Prozessschritt die Bewegungskopplung zwischen dem Zellstapel und der jeweiligen Zugplatte aufrechtzuerhalten.

Im zweiten Einzieh-Prozessschritt sind dagegen nur das Außenlagen-Folienende und die jeweilige Zugplatte kraftübertragend mit dem Zuganker verbunden. Das Innenlagen-Folienende ist dagegen vom Zuganker gelöst, d.h. es wird beim zweiten Einzieh-Prozessschritt nicht mit der Einziehkraft beaufschlagt. Dadurch wird ein Abschälvorgang zwischen der Außen- und der Innenlage in Gang gesetzt, bei dem sich die Außen- und Innenlagen aneinander mit geringer Reibung abschälen. Bei dem Abschälvorgang verbleibt die (nicht mit der Einziehkraft beaufschlagte) Innenlage am Zellstapelende, während sich die Außenlage mit der Zugplatte mitbewegt.

Das Außenlagen-Folienende kann permanent, zum Beispiel über eine Schraub- oder Klemmverbindung, kraftübertragend an der jeweiligen Zugplatte angebunden sein. Bevorzugt ist es, wenn die Schraub- oder Klemmverbindung mittels Klemmbacken realisiert ist. Diese können unter Zwischenlage des Außenlagen-Folienendes gegeneinander verspannt sein. Der Zuganker kann in der Einziehrichtung lösbar an den Klemmbacken der beiden Zugplatten abgestützt sein, und zwar insbesondere unter Zwischenklemmung des Innenlagen-Folienendes. In diesem Fall ist die folgende Prozessführung realisierbar: Nach Abschluß des ersten Einzieh-Prozessschritts wird der Zuganker von den Klemmbacken der Zugplatten kurzzeitig gelöst, um die Zwischenklemmung des Innenlagen-Folienendes aufzuheben. Damit ist gewährleistet, dass im zweiten Einzieh-Prozessschritt das Innenlage-Folienende nicht mehr kraftübertragend am Zuganker angebunden ist. Im zweiten Einzieh-Prozessschritt findet daher der bereits beschriebene Abschälvorgang zwischen der Innen- und Außenlage der Gleitfolie statt.

Die Batteriezellen sind bevorzugt nicht unmittelbar nebeneinander in Anlage gestapelt, sondern vielmehr unter Zwischenlage unterschiedlicher dicker Kompressionspads, etwa aus Schaummaterial. Bevorzugt ist es, wenn der Zellstapel an seinen beiden Stapelenden jeweils mit einem solchen Kompressionspad abschließt. In diesem Fall ist das am Stapelende angeordnete Kompressionspad in Anlage mit der jeweiligen Zugplatte. Die Zugplatte hat daher keine unmittelbare Kontaktfläche mit der am Stapelende angeordneten Batteriezelle, wodurch diese vor mechanischer Beschädigung durch die Zugplatten geschützt ist.

Nachfolgend ist ein Ausführungsbeispiel der Erfindung anhand der beigefügten Figuren beschrieben: Es zeigen:

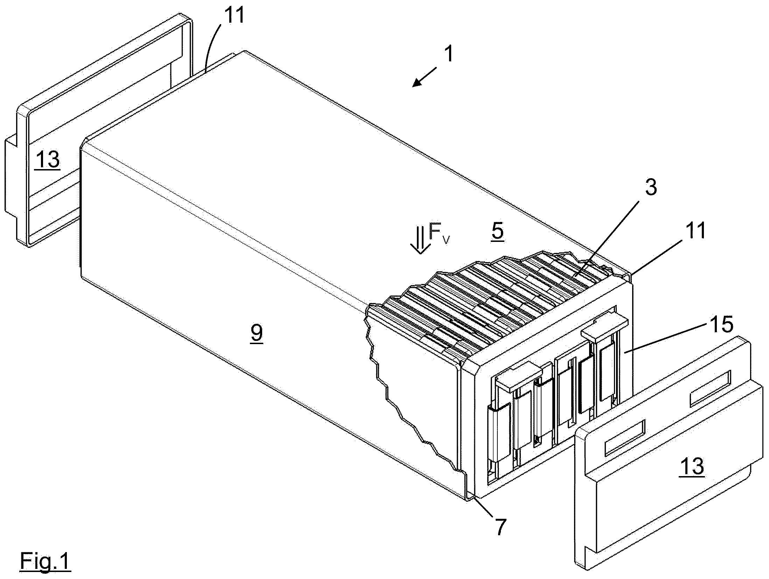

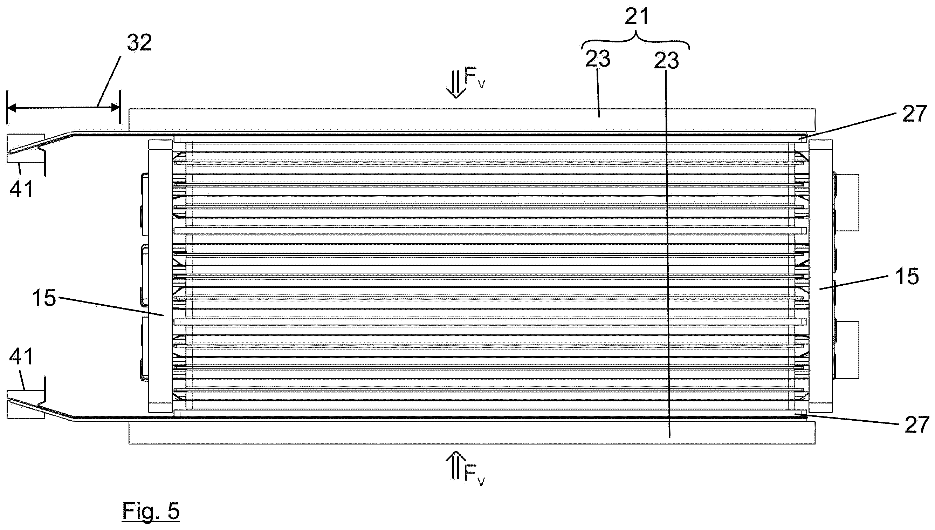

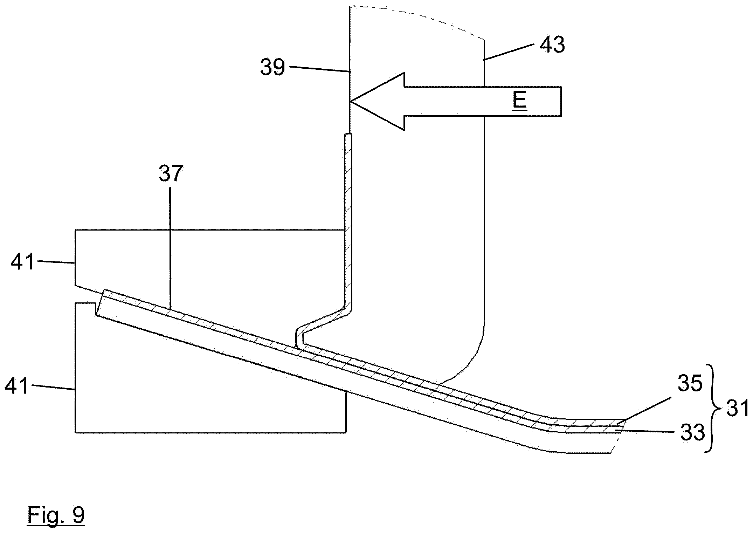

- Figuren 1 bis 12: unterschiedliche Ansichten, anhand derer ein Verfahren zur Fertigung eines Batteriemoduls mittels einer erfindungsgemäßen Prozessanordnung veranschaulicht ist.

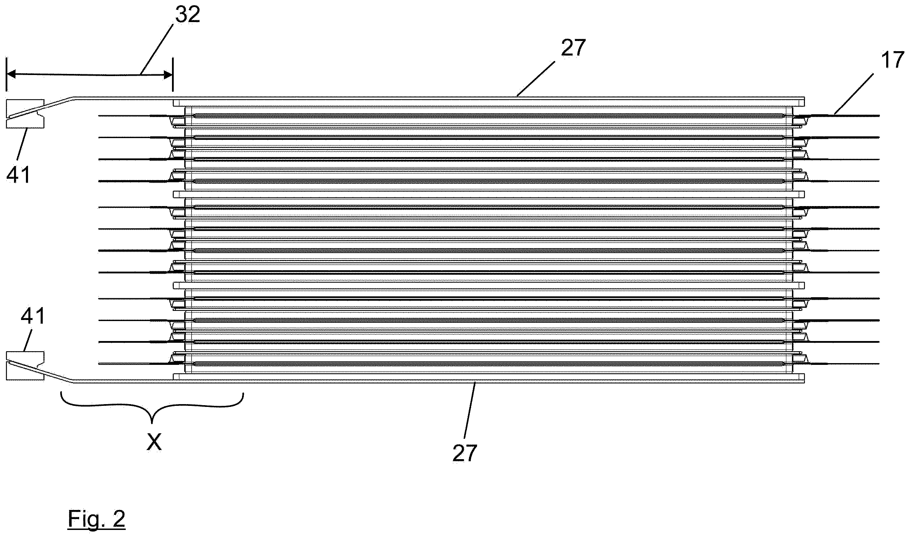

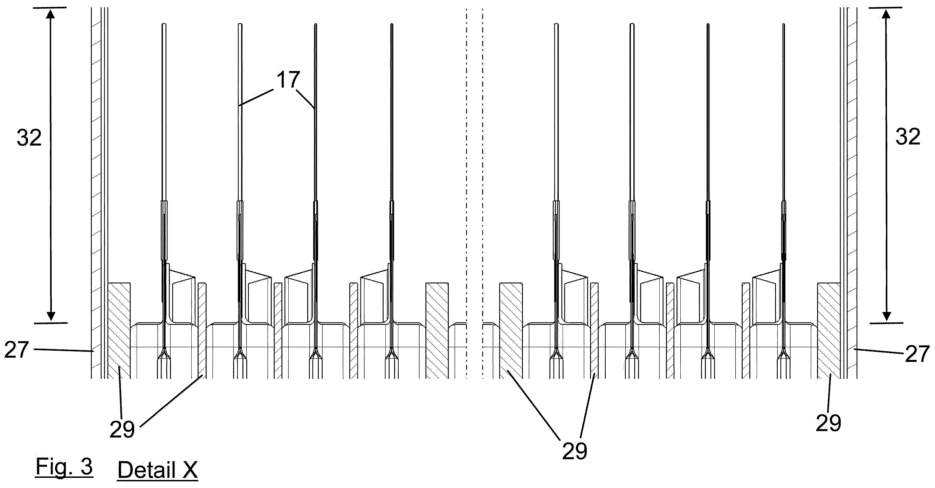

In der Figur 1 ist ein fertiggestelltes Batteriemodul insoweit veranschaulicht, als es für das Verständnis der Erfindung erforderlich ist. Demnach weist das Batteriemodul ein quaderförmiges Modulgehäuse 1 auf, in dem ein Zellstapel 3 angeordnet ist. Ein Grundkörper des Modulgehäuses 1 ist ein Aluminium-Strangpressprofil aus einer Deckwand 5, einer Bodenwand 7, einer in der Figur 1 vorderen Seitenwand 9 und einer nicht gezeigten hinteren Seitenwand. Der Grundkörper weist in der Figur 1 zwei offene Gehäuseseiten 11 auf, die mittels Stirnplatten 13 über Laserschweißung verschließbar sind. Der Zellstapel 3 ist in der Figur 1 aus Pouchzellen aufgebaut, die in einer Stapelrichtung zwischen der Deckwand 5 und der Bodenwand 7 mit einer mechanischen Vorspannung Fv beaufschlagt sind. Der Zellstapel 3 weist außerdem seitliche Kunststoffträger 15 mit darin integrierten (nicht gezeigten) Stromschienen auf, um die seitlichen Zellableiter 17 (Figur 2 oder 3) des Zellstapels 3 miteinander elektrisch zu verschalten.

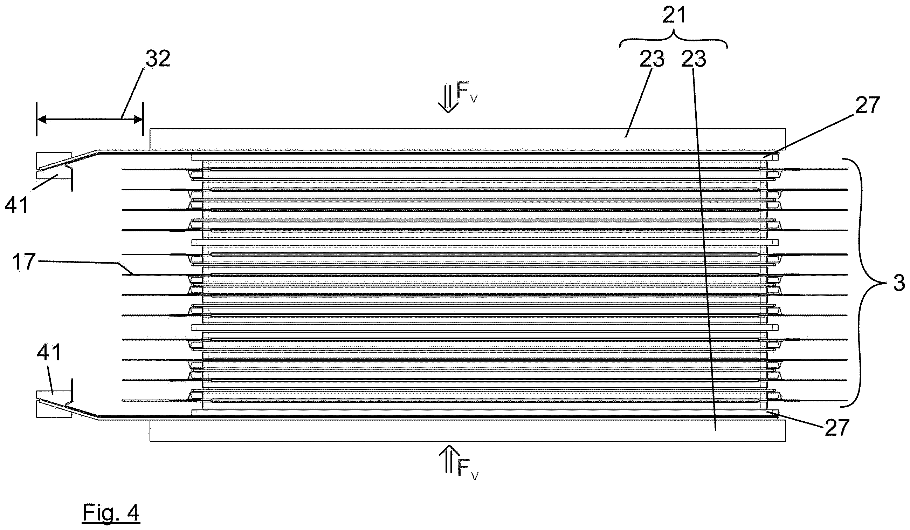

Nachfolgend wird anhand der Figuren 2 bis 12 ein Verfahren zur Fertigung des in der Figur 1 gezeigten Batteriemoduls beschrieben: Demzufolge wird in einer nicht gezeigten Stapelstation zunächst ein noch unverspannter Zellstapel 19 (Figur 2) gestapelt. Dieser wird anschließend in einer Pressstation (Figur 4) mit einem Werkstückträger 21 in der Stapelrichtung unter Aufbau der mechanischen Vorspannung Fv verspannt. Der Werkstückträger 21 weist in der Figur 4 zwei Druckplatten 23 auf, die unter Zwischenlage des Zellstapels 3 über eine nicht gezeigte Spanneinheit gegeneinander verspannt sind.

Anschließend folgt ein Bearbeitungsprozess (Figur 5), bei dem die in den seitlichen Kunststoffträgern 15 befindlichen Stromschienen durch Laserschweißen mit den Zellableitern 17 des Zellstapels 3 elektrisch verbunden werden. Die so gebildete Baueinheit wird zu einer Einziehstation (Figuren 6 und 7) transferiert. In der Einziehstation wird ein Einziehprozess durchgeführt, bei dem der Zellstapel 3 unter Aufrechterhaltung der mechanischen Vorspannung Fv aus dem Werkstückträger 21 in den Grundkörper des Modulgehäuses 1 eingezogen wird.

Der Kern der Erfindung besteht in der Ausgestaltung des Einziehprozesses. Dieser ist im Hinblick auf eine möglichst gleichmäßige Belastung des Zellstapels 3 bei dessen Übergang vom Werkstückträger 21 in den Modulgehäuse-Grundkörper ausgelegt.

Hierzu weist die Prozessanordnung als Montagehilfen zwei Zugplatten 27 zum Beispiel aus Metall auf. Die Zugplatten 27 werden bereits im Stapelprozess (Figur 2) an den beiden Stapelenden des Zellstapels 3 angeordnet. Im anschließenden Pressprozess (Figur 4) werden die Zugplatten 27 zusammen mit dem Zellstapel 3 im Werkstückträger 21 verspannt. Wie aus den Figuren hervorgeht, überragt jede der beiden Zugplatten 27 den Zellstapel 3 in einer Einziehrichtung E mit einen Zugplatten-Überstand 32. Die Zugplatten-Überstände 32 beider Zugplatten 27 sind während des Einziehprozesses in Eingriff mit einem Zuganker 43 bringbar.

Die Stapelenden des Zellstapels 3 sind gemäß der Figur 3 durch Kompressionspads 29 zum Beispiel aus Schaumstoff gebildet, so dass ein unmittelbarer Kontakt der Zugplatten 27 mit den äußeren Batteriezellen des Zellstapels 3 vermieden wird. Weitere Kompressionspads 29 sind im Zellstapel 3 zwischen benachbarten Batteriezellen angeordnet.

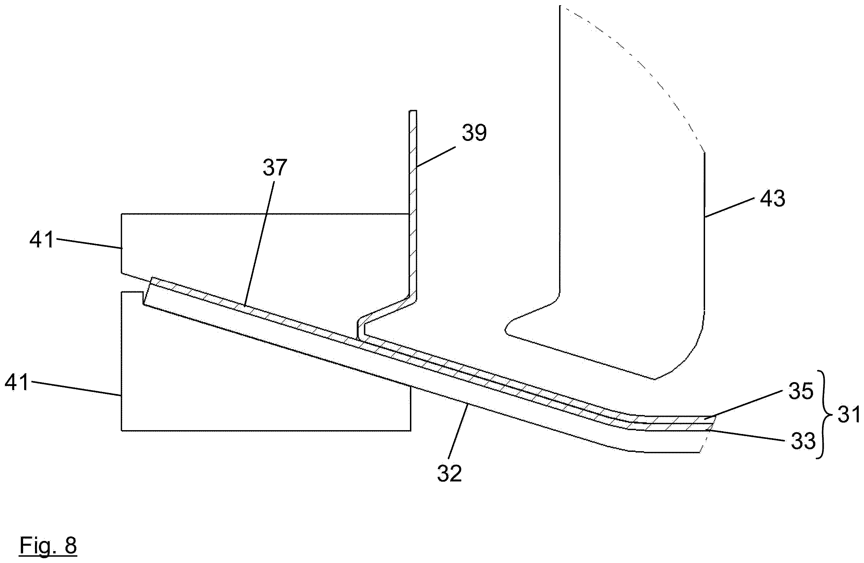

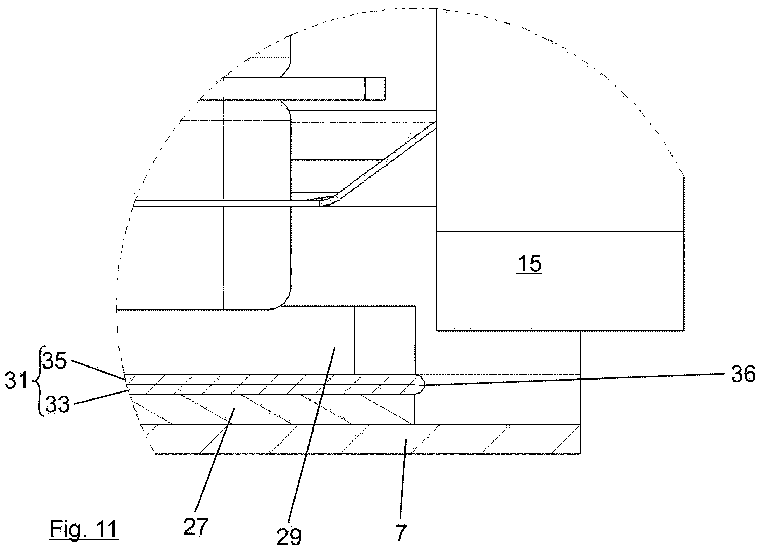

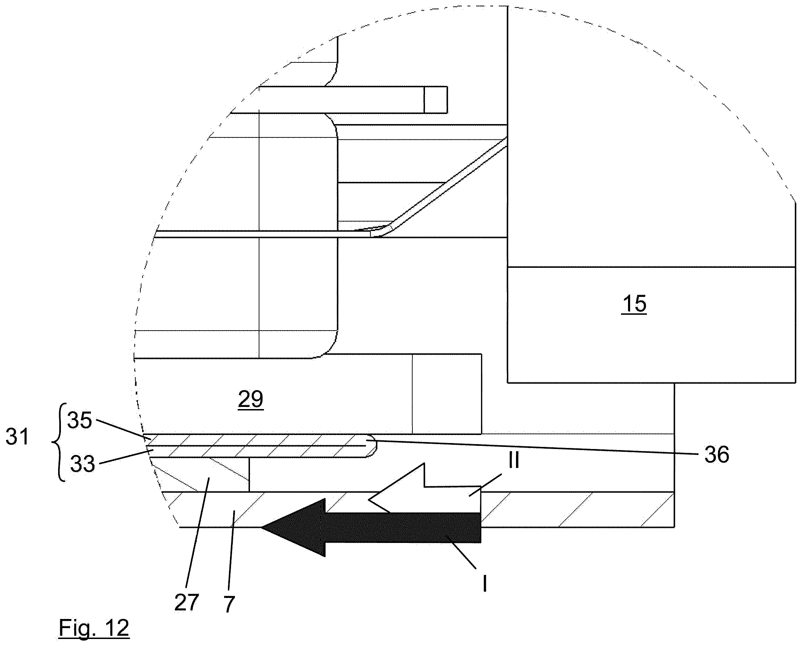

Zur Steigerung der Gleiteigenschaften weist jede der Zugplatten 27 eine Gleitfolie 31 (Figuren 8 bis 12) auf. Die Gleitfolie 31 ist auf Umschlag als eine schlaufenförmige Doppellage zwischen der jeweiligen Zugplatte 27 und dem Zellstapelende positioniert, und zwar mit einer in Stapelrichtung betrachtet zugplattenseitigen Außenlage 33 und einer zellstapelseitigen Innenlage 35, die an einem Folien-Umbug 36 (Figuren 11 und 12) ineinander übergehen. Die Außenlage 33 und die Innenlage 35 sind gemäß der Figur 8 jeweils in einer Einziehrichtung E über den Zellstapel 3 hinaus mit einem Außenlage-Folienende 37 und einem Innenlagen-Folienende 39 verlängert. Das Außenlagen-Folienende 37 ist über eine Klemmverbindung kraftübertragend an der jeweiligen Zugplatte 27 angebunden.

Die Klemmverbindung ist gemäß den Figuren 8 bis 10 mithilfe von Klemmbacken 41 realisiert. Diese sind unter Zwischenlage des Außenlagen-Folienendes 37 am Zugplatten-Überstand 32 mittels einer nicht gezeigten Schraubverbindung verspannt. Zudem weist die Einziehstation den Zuganker 43 auf, der in der Einziehrichtung E lösbar an den Klemmbacken 41 der beiden Zugplatten 27 abgestützt ist, und zwar unter Zwischenklemmung des Innenlagen-Folienendes 39.

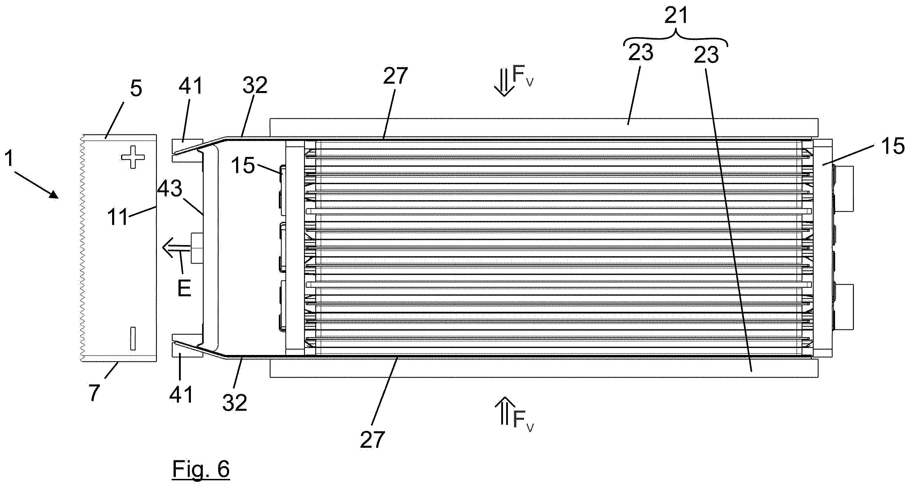

Der Einziehprozess ist in einen ersten Einzieh-Prozessschritt und in einen zweiten Einzieh-Prozessschritt unterteilt. Zur Vorbereitung des ersten Einzieh-Prozessschrittes wird der Modulgehäuse-Grundkörper in der Einziehrichtung E betrachtet mit seinen gegenüberliegenden offenen Gehäuseseiten 11 in Flucht mit dem Zellstapel 3 ausgerichtet, wie es in der Figur 6 angedeutet ist. Der Zuganker 43 wird während des Einziehprozesses durch die offenen Gehäuseseiten 11 des Modulgehäuse-Grundkörpers geführt. Im ersten Einzieh-Prozessschritt sind die beiden Folienenden 37, 39 zusammen mit der jeweiligen Zugplatte 27 kraftübertragend mit dem Zuganker 43 verbunden. Dadurch findet ein ausreichend großer Reibkraft-Aufbau zwischen dem Zellstapel 3, der Gleitfolien-Doppellage 31 und der Zugplatte 27 statt. Die Zugplatten 27 mitsamt zwischengeordnetem Zellstapel 3 können somit im ersten Einzieh-Prozessschritt als eine bewegungsgekoppelte Vormontageeinheit vom Werkstückträger 21 in den Modulgehäuse-Grundkörper eingezogen werden. Zu Beginn des ersten Einzieh-Prozessschrittes fahren gemäß der Figur 6 zunächst die dem Zellstapel 3 vorauseilenden Zugplatten-Überstände 32 in den Modulgehäuse-Grundkörper ein und stützen sich diese unter Aufbau einer mechanischen Vorspannung Fv gleitend an den Boden- und Deckwänden 5, 7 ab. Im weiteren Verlauf zieht der Zuganker 43 den, den Zugplatten-Überständen 32 nacheilenden Zellstapel 3 in den Modulgehäuse-Grundkörper ein.

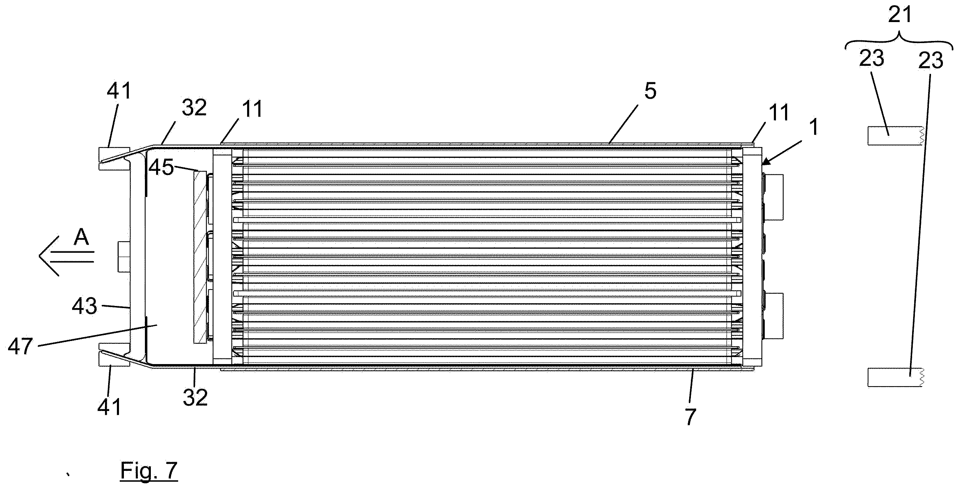

Der erste Einzieh-Prozessschritt endet mit Erreichen einer Zellstapel-Endlage (Figur 7). Diese ist mittels eines Rückhalters 45 definiert, der in einen Freigang 47 zwischen dem Zuganker 43 und dem Zellstapel 3 einragt. Der Rückhalter 45 wirkt als ein Bewegungsanschlag, der eine Weiterbewegung des Zellstapels 3 in der Einziehrichtung E unterbindet.

In Vorbereitung auf den zweiten Einzieh-Prozessschritt wird die Zuganker-Bewegung in der Einziehrichtung E unterbrochen. Der Zuganker 43 wird kurzzeitig von den beiden Klemmbacken 41 gelöst (Figur 8), damit das Innenlagen-Folienende 39 außer kraftübertragender Verbindung mit dem Zuganker 43 gelangt.

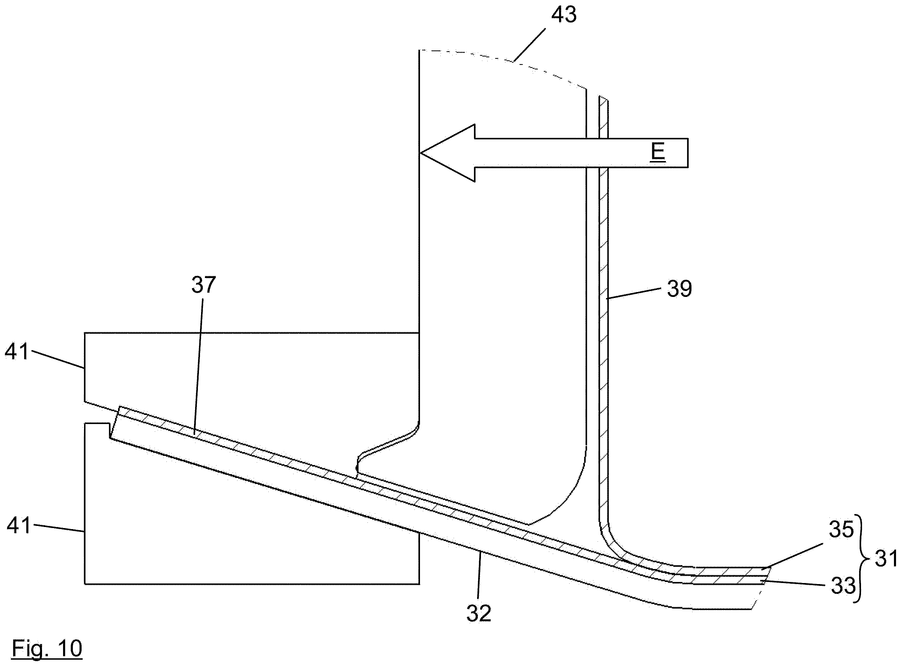

Im zweiten Einzieh-Prozessschritt (Figur 7 und 10) zieht der Zuganker 43 in einer mit der Einziehrichtung E übereinstimmenden Ausziehrichtung A die beiden Zugplatten 27 - nunmehr bewegungsentkoppelt vom Zellstapel 3 - aus der vom Werkstückträger 21 abgewandten Modulgehäuseseite 11.

Im zweiten Einzieh-Prozessschritt ist lediglich das Außenlagen-Folienende 37 und die jeweilige Zugplatte 27 mit der Einziehkraft des Zugankers 43 beaufschlagt, während das Innenlagen-Folienende 39 außer Verbindung mit dem Zuganker 43 ist. Auf diese Weise wird ein Abschälvorgang (Figuren 11 und 12) zwischen der Außenlage 33 und der Innenlage 35 in Gang gesetzt. Bei dem Abschälvorgang schälen die Außen- und Innenlagen 33, 35 aneinander mit geringer Reibung ab. Im Abschälvorgang verbleibt die Innenlage 35 am Zellstapelende, während sich die Außenlage 33 bewegungsgekoppelt mit der Zugplatte 27 mitbewegt.

Durch das Anbinden bzw. Lösen des Innenlagen-Folienendes 39 am/vom Zuganker 43 können die Gleiteigenschaften zwischen der jeweiligen Zugplatte 27 und dem benachbarten Zellstapelende während des Einziehprozesses wie folgt gesteuert werden: Im ersten Einzieh-Prozessschritt sind die beiden Folienenden 37, 39 und die jeweilige Zugplatte 27 kraftübertragend am Zuganker 43 angebunden. Dadurch werden die Gleiteigenschaften zwischen der Zugplatte 27 und dem benachbarten Zellstapelende reduziert, um die Bewegungskopplung zwischen Zellstapel 3 und Zugplatte 27 zu gewährleisten. Im zweiten Einzieh-Prozessschritt sind das Außenlagen-Folienende 37 und die jeweilige Zugplatte 27 mit dem Zuganker 43 verbunden, während das Innenlagen-Folienende 39 außer Verbindung mit dem Zuganker 43 ist. Dadurch wird zwischen der Außenlage 33 und der Innenlage 35 der Abschälvorgang (Figuren 10 und 11) in Gang gesetzt. Der Abschälvorgang erhöht - im Vergleich zum ersten Einzieh-Prozessschritt - die Gleiteigenschaften zwischen Zugplatte 27 und benachbartem Zellstapelende.

Beim Abschälvorgang legen die Zugplatte 27 und der Folien-Umbug 36 unterschiedliche Wegstrecken zurück. Dabei ist die von der Zugplatte 27 zurückgelegte Wegstrecke (in der Figur 12 durch den Pfeil I angedeutet) doppelt so groß wie die von dem Folien-Umbug 36 zurückgelegte Wegstrecke (in der Figur 12 durch den Pfeil II angedeutet).

Nachdem der Zuganker 43 die beiden Zugplatten 27 komplett aus dem Modulgehäuse-Grundkörper herausgezogen hat, wird dieser weiter solange in der Ausziehrichtung A bewegt, bis auch der Folien-Umbug 36 komplett aus dem Modul herausgezogen ist. Nach Abschluss des zweiten Einzieh-Prozessschrittes besteht das Batteriemodul aus dem Zellstapel 3 und dem Modulgehäuse-Grundkörper, d.h. es daher keinerlei Montagehilfe im Batteriemodul.

Die Folien 31 können im Anschluss an den Einziehprozess wieder mittig auf Umschlag gefaltet werden. Die Folien 31 verbleiben an den beiden Zugplatten 27 befestigt. Dadurch können sie für den nächsten Einziehprozess wiederverwendet werden, bis sie Anzeichen für Verschleiß aufweisen. In diesem Fall können die Gleitfolien 31 von den Zugplatten 27 entfernt und durch neue ersetzt werden. Um die Reibung und eventuellen Abrieb zwischen der Zugplatte 27 und der jeweils benachbarten Boden- oder Deckwand 5, 7 zu minimieren, kann die Zugplatte 27 an ihrer Außenseite beispielhaft mit Teflon beschichtet sein.

### BEZUGSZEICHENLISTE

- 1: Modulgehäuse
- 3: Zellstapel
- 5: Deckwand
- 7: Bodenwand
- 9: Seitenwand
- 11: offene Gehäuseseite
- 13: Stirnplatte
- 15: Kunststoffträger
- 17: Zellableiter
- 19: Zellstapel
- 21: Werkstückträger
- 23: Zugplatte
- 24: Spanneinheit
- 25: Einziehstation
- 27: Zugplatte
- 29: Kompressionspad
- 31: Gleitfolie
- 33: zugplattenseitige Außenlage
- 32: Zugplatten-Überstand
- 35: zellstapelseitige Innenlage
- 36: Folien-Umbug
- 37: Außenlagen-Folienende
- 39: Innenlagen-Folienende
- 41: Klemmbacken
- 43: Zuganker
- 45: Rückhalter
- 47: Freigang
- E: Einziehrichtung
- A: Ausziehrichtung
- Fv: mechanische Vorspannung
- I: von der Zugplatte 27 beim Abschälvorgang zurückgelegte Wegstrecke
- II: vom Folien-Umbug 36 beim Abschälvorgang zurückgelegte Wegstrecke

## Patentansprüche

1. Prozessanordnung zur Fertigung eines Batteriemoduls mit einem Modulgehäuse (1), in dem ein Zellstapel (3), insbesondere aus Pouchzellen, angeordnet ist, der in einer Stapelrichtung zwischen Modulgehäusewänden (5, 7) mit einer mechanischen Vorspannung (Fv) beaufschlagt ist, mit
- einer Pressstation, in der der Zellstapel (3) in einem Pressprozess mittels eines Werkstückträgers (21) unter mechanische Vorspannung (Fv) setzbar ist, und
- einer Einziehstation, in der ein Zuganker (43) den Zellstapel (3) unter Aufrechterhaltung der mechanischen Vorspannung (Fv) in einem Einziehprozess aus dem Werkstückträger (21) in das Modulgehäuse (1) einzieht, **dadurch gekennzeichnet, dass**
zur Aufrechterhaltung und/oder gleichmäßigen Verteilung der mechanischen Vorspannung (Fv) des Zellstapels (3) während des Einziehprozesses Zugplatten (27) als Montagehilfe bereitgestellt sind.

2. Prozessanordnung nach Anspruch 1, **dadurch gekennzeichnet, dass** die Zugplatten (27) an beiden Stapelenden des Zellstapels (3) angeordnet sind und zusammen mit dem Zellstapel (3) im Werkstückträger (21) verspannt sind, und/oder dass jede der Zugplatten (27) den Zellstapel (3) in der Einziehrichtung (E) mit einem Zugplatten-Überstand (32) überragt, so dass insbesondere zu Beginn des Einziehprozesses die dem Zellstapel (3) vorauseilenden Zugplatten-Überstände (32) in das Modulgehäuse (1) einfahren und sich unter Aufbau der mechanischen Vorspannung (Fv) gleitend an der jeweiligen Modulgehäusewand (5, 7) abstützen, und/oder dass im weiteren Verlauf des Einziehprozesses der Zuganker (43) den, den Zugplatten-Überständen (32) nacheilenden Zellstapel (3) in das Modulgehäuse (1) einzieht.

3. Prozessanordnung nach Anspruch 1 oder 2, **dadurch gekennzeichnet, dass** das Modulgehäuse (1) in der Einziehrichtung (E) betrachtet zwei gegenüberliegende offene Gehäuseseiten (11) aufweist, die im Einziehprozess in der Einziehrichtung (E) in Flucht mit dem Zellstapel (3) ausgerichtet sind, so dass insbesondere der Zuganker (43) während des Einziehprozesses durch die offenen Gehäuseseiten (11) des Modulgehäuses (1) führbar ist.

4. Prozessanordnung nach einem der Ansprüche 1 bis 3, **dadurch gekennzeichnet, dass** der Einziehprozess unterteilt ist in einen ersten Einzieh-Prozessschritt, bei dem der Zuganker (43) den Zellstapel (3) und die Zugplatten (27) als eine bewegungsgekoppelte Vormontageeinheit vom Werkstückträger (21) in das Modulgehäuse (1) zieht, und zwar bis Erreichen einer Zellstapel-Endlage, und in einen zweiten Einzieh-Prozessschritt, bei dem die beiden Zugplatten (27) aus dem Modulgehäuse (1) entfernbar sind.

5. Prozessanordnung nach Anspruch 4, **dadurch gekennzeichnet, dass** zur Durchführung des zweiten Einzieh-Prozessschritts ein Rückhalter (45) als Bewegungsanschlag bereitgestellt ist, und dass der Rückhalter (45) ab Erreichen der Zellstapel-Endlage eine Weiterbewegung des Zellstapels (3) in der Einziehrichtung (E) unterbindet, und/oder dass im zweiten Einzieh-Prozessschritt der Zuganker (43) in einer mit der Einziehrichtung (E) übereinstimmenden Ausziehrichtung (A) die Zugplatten (27) bewegungsentkoppelt vom Zellstapel (3) aus einer vom Werkstückträger (21) abgewandten offenen Gehäuseseite (11) des Modulgehäuses (1) herauszieht, und/oder dass in der Einziehrichtung (E) betrachtet zwischen dem Zuganker (43) und dem Zellstapel (3) ein Freigang (47) ausgebildet ist, in dem während des zweiten Einzieh-Prozessschritts der Rückhalter (45) positionierbar ist.

6. Prozessanordnung nach einem der vorhergehenden Ansprüche, **dadurch gekennzeichnet, dass** zur Steigerung der Gleiteigenschaften die jeweilige Zugplatte (27) unter Zwischenlage eines Gleitmittels am Stapelende und/oder an der benachbarten Modulgehäusewand (5, 7) abgestützt ist.

7. Prozessanordnung nach Anspruch 6, **dadurch gekennzeichnet, dass** das Gleitmittel eine Gleitfolie (31) ist, und dass insbesondere die Gleitfolie (31) auf Umschlag als eine schlaufenförmige Doppellage zwischen der Zugplatte (27) und dem Zellstapelende positioniert ist, und zwar insbesondere mit einer in Stapelrichtung betrachtet zugplattenseitigen Außenlage (33) und einer zellstapelseitigen Innenlage (35), und dass die Außenlage (33) und die Innenlage (35) jeweils ein in der Einziehrichtung (E) über den Zellstapel (3) hinaus verlängertes Außenlagen-Folienende (37) sowie Innenlagen-Folienende (39) aufweisen.

8. Prozessanordnung nach Anspruch 7, **dadurch gekennzeichnet, dass** im ersten Einzieh-Prozessschritt die beiden Folienenden (37, 39) und die jeweilige Zugplatte (27) mit der Einziehkraft des Zugankers (43) beaufschlagt sind, so dass insbesondere ein ausreichend großer Reibkraft-Aufbau zwischen dem Zellstapel (3), der Gleitfolien-Doppellage (31) und der Zugplatte (27) stattfindet, um die Bewegungskopplung zwischen Zellstapel (3) und Zugplatte (27) zu gewährleisten, und/oder dass im zweiten Einzieh-Prozessschritt das Außenlagen-Folienende (37) und die jeweilige Zugplatte (27) mit der Einziehkraft des Zugankers (43) beaufschlagt sind, während das Innenlagen-Folienende (39) außer kraftübertragender Verbindung mit dem Zuganker (43) ist, so dass insbesondere im zweiten Einzieh-Prozessschritt zwischen der Außenlage (33) und der Innenlage (35) ein Abschälvorgang erfolgt, bei dem sich die Außen- und Innenlagen (33, 35) aneinander mit geringer Reibung abschälen, wobei die Innenlage (35) am Zellstapelende verbleibt, während sich die Außenlage (33) mit der Zugplatte (27) mitbewegt.

9. Prozessanordnung nach Anspruch 7 oder 8, **dadurch gekennzeichnet, dass** das Außenlagen-Folienende (37), insbesondere über eine Schraub- oder Klemmverbindung kraftübertragend an dem jeweiligen Zugplatte-Überstand (32) angebunden ist, und dass insbesondere die Schraub- oder Klemmverbindung mittels Klemmbacken (41) realisiert ist, die unter Zwischenlage des Außenlagen-Folienendes (39) miteinander verspannt sind, und dass insbesondere der Zuganker (43) in der Einziehrichtung (E) lösbar an dem Klemmbacken (41) der beiden Zugplatten (27) abgestützt ist, und zwar insbesondere unter Zwischenklemmung des Innenlagen-Folienendes (39), und dass insbesondere nach Abschluß des ersten Einzieh-Prozessschritts die Zwischenklemmung des Innenlagen-Folienendes (39) aufhebbar ist, insbesondere durch ein kurzzeitiges Lösen des Zugankers (43) von den Klemmbacken (41) der Zugplatten (27).

10. Prozessanordnung nach einem der vorhergehenden Ansprüche, **dadurch gekennzeichnet, dass** der Zellstapel (3) an seinen beiden Stapelenden jeweils mit einem Kompressionspad (29) abschließt.

11. Verfahren zur Fertigung eines Batteriemoduls mit einem Modulgehäuse (1), in dem ein Zellstapel (3) angeordnet ist, der in einer Stapelrichtung zwischen Modulgehäusewänden (5, 7) mit einer mechanischen Vorspannung (Fv) beaufschlagt ist, insbesondere mittels einer Prozessanordnung nach einem der vorhergehenden Ansprüche, mit
- einem Pressprozess, bei dem der Zellstapel (3) mittels eines Werkstückträgers (21) unter mechanische Vorspannung (Fv) gesetzt wird, und
- einem Einziehprozess, bei dem ein Zuganker (43) den Zellstapel (3) unter Aufrechterhaltung der mechanischen Vorspannung (Fv) aus dem Werkstückträger (21) in das Modulgehäuse (1) einzieht, **dadurch gekennzeichnet, dass**
zur Aufrechterhaltung der mechanischen Vorspannung (Fv) des Zellstapels (3) während des Einziehprozesses Zugplatten (27) als Montagehilfe bereitgestellt sind.

12. Verfahren nach Anspruch 11, **dadurch gekennzeichnet, dass** die Zugplatten (27) an beiden Stapelenden des Zellstapels (3) angeordnet sind und zusammen mit dem Zellstapel (3) im Werkstückträger (21) verspannt sind.

13. Verfahren nach Anspruch 11 oder 12, **dadurch gekennzeichnet, dass** jede der Zugplatten (27) den Zellstapel (3) in der Einziehrichtung (E) mit einem Zugplatten-Überstand (32) überragt, so dass insbesondere zu Beginn des Einziehprozesses die dem Zellstapel (3) vorauseilenden Zugplatten-Überstände (32) in das Modulgehäuse (1) einfahren und sich unter Aufbau der mechanischen Vorspannung (Fv) gleitend an der jeweiligen Modulgehäusewand (5, 7) abstützen.

14. Verfahren nach einem der Ansprüche 11 bis 13, **dadurch gekennzeichnet, dass** im weiteren Verlauf des Einziehprozesses der Zuganker (43) den, den Zugplatten-Überständen (32) nacheilenden Zellstapel (3) in das Modulgehäuse (1) einzieht.
